# EUROPEAN PATENT APPLICATION

(11) **EP 1 772 638 A2**
(43) Date of publication of application: **11.04.2007**
(21) Application number: 06121396.3
(22) Date of filing: 28.09.2006
(51) Int. Cl.: F16C 1/06, F16C 1/26, B26B 25/00

(54) **Flexible drive shaft casing for power operated rotary knife**

(30) Priority: 03.10.2005 US 723193 P; 04.08.2006 US 499148
(71) Applicant: BETTCHER INDUSTRIES, INC., Birmingham Ohio 44816 (US)
(72) Inventor: Rosu, Marinel, Strongville, OH 44136 (US); Tansey, Martin Patrick, Lorain, OH 44053 (US); Sukey, Martin, Grafton, OH 44044 (US); Forconi, Louis F., Vermillion, OH 44089 (US)
(74) Representative: Gates, Marie Christina Esther

(57) **Abstract**

A flexible shaft drive transmission for a power driven tool. The transmission features a first end connectable to a drive motor and a second end connectable to the power driven tool. The transmission includes a flexible drive shaft assembly comprising a flexible elongated drive transmitting member, a first end of the drive transmitting member including a first coupling operatively coupled to the drive motor and a second end of the drive transmitting member including a second coupling operatively coupled to the power driven tool. The transmission further includes a tubular casing surrounding and coaxial with said drive shaft assembly and supporting said drive shaft assembly for rotation generally about a longitudinal axis of said drive shaft assembly relative to said casing. The casing includes a core comprising a spiral wound strip of material having interlocking opposing edges, a braided wire layer surrounding the core, and a polymer layer surrounding the braided wire layer.

## Description

### Field of the Invention

The present invention relates to a flexible drive shaft transmission for a power operated rotary knife and, more particularly, to a drive shaft casing for such a flexible drive shaft.

### Background of the Invention

Power operated rotary knives are well known in the meat processing industry and have been widely adopted for trimming fat and connective tissue from meat, trimming meat from bones and producing slices or filets of meat. Such power operated rotary knives typically include a rotary blade supported for rotation in a blade housing. The blade housing is coupled to a blade support assembly including hollow handle terminating in a head member. A pinion gear, supported in a head member, is operatively coupled to the rotary blade.

A flexible drive shaft transmission is coupled between the pinion gear and a source of power such as an electric or pneumatic motor to drive the pinion gear and permit an operator to freely move and use the knife at a workstation that is remote from the driving motor. For example, a power driven rotary knife with a flexible drive shaft transmission assembly is disclosed in U.S. Patent No. 6,751,872, issued on June 22, 2004 and assigned to the assignee of the present invention. The '872 patent is incorporated herein in its entirety by reference.

The transmission assembly includes a flexible drive shaft or flex shaft which is rotated by the driving motor and a flexible casing that encloses and seals the flex shaft. The casing terminates in two connectors. A first connector engages the driving motor such that an end of the flex shaft is rotated by the motor. A second connector releasably engages the rotary knife handle such that an end of the flex shaft is coupled to the pinion gear for rotating the blade. A lever actuation mechanism pivotally attached to the handle is provided to allow the operator to selectively couple the rotation of the flexible shaft to power the blade by pivoting the lever to a position adjacent to the handle. The second connector includes a locking mechanism that is provided to permit the user to connect and disconnect the second connector from the knife handle.

Various casing designs have been proposed for the flex shaft drive transmission including a thin metallic cylinder and a plastic casing. The casing is subject to a number of design requirements which cause each of the present designs to have certain shortcomings. The casing must be flexible and lightweight, while still being durable, cut-resistant and impervious to cleaning chemicals and frequent washings the drive transmission is subject to. Since lubrication is injected into the space between the flex shaft and the casing, the casing must provide a stable reservoir for lubrication of the rotating flex shaft. The casing should minimize friction with the rotating flex shaft and should be resistant to overheating. The casing should have minimal stretching while in use. The casing must support a variety of end connectors depending on the application including swaged end connectors and molded end connectors. Finally, as cost is always a key consideration, the casing should be easy and efficient to fabricate in conjunction with the flex shaft drive transmission.

What is needed is an improved casing for a flex drive transmission assembly that more fully satisfies the above-noted criterion than present designs.

### Summary of the Invention

The present invention concerns a flexible drive transmission for use with a power operated tool, such as a power driven rotary knife. In one aspect the present invention concerns a flexible drive shaft transmission including a driven flex shaft for transmitting power between a drive motor and a drive gear of the power operated tool and a casing overlying the flex drive shaft. In one preferred embodiment, the casing includes a core comprising a spiral wound metal conduit, a braided metal layer overlying the core and an outer layer of polymer material, such as thermoplastic elastomeric olefin material.

The interconnecting edges of the spiral wound conduit core extend radially inwardly to provide a discontinuous, arcuate surface for supporting the flex shaft. This configuration provides strength and minimizes contact surface area between the flex shaft and the core. The configuration also provides a natural reservoir for lubrication injected between the flex shaft and the core and reduces the migration of lubricant along the flex shaft during rotation of the shaft. The braided layer adds further strength and cut resistance to the casing, limits stretching of the overall length of the casing and prevents the spiral wound core from winding up or unwinding in use. The thermoplastic polymer outer layer provides a smooth, durable outer surface, and when extruded onto the casing in a heated, semi-liquid state functions to impregnate and bind the braided layer to the spiral wound core. Finally, the casing is simple to fabricate using known technologies of spiral wrapping, braiding and extruding and supports a variety of end fittings.

These and other objects, advantages, and features of the exemplary embodiment of the invention are described in detail in conjunction with the accompanying drawings.

### Brief Description of the Drawings

Figure 1 is a view, partly in front elevation and partly in section of a flexible drive transmission of the present invention a motor and a power operated tool;

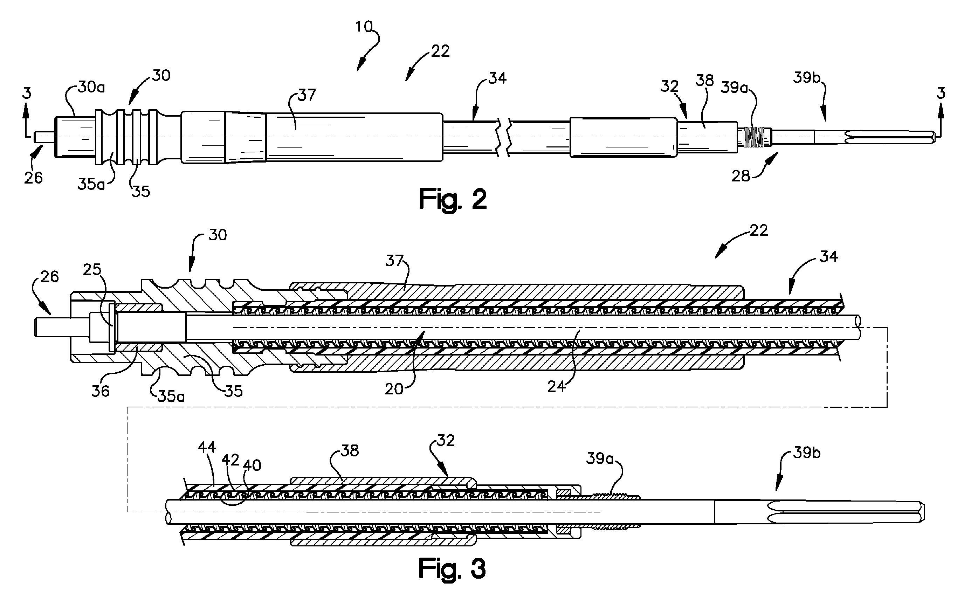

Figure 2 is front elevation view of a flexible drive transmission of the present invention;
Figure 3 is a longitudinal section view of the flexible drive transmission of the present invention; and
Figure 4 is an enlarged section view of the flexible drive transmission of the present invention with the drive shaft removed.

### Detailed Description

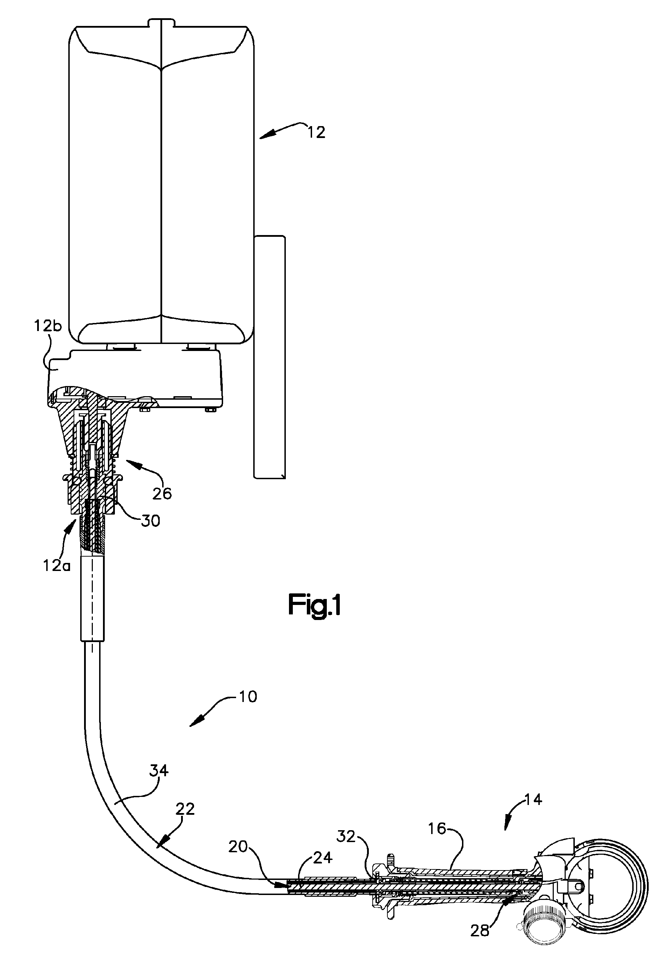

A flexible drive shaft transmission is shown generally at 10 in Figure 1. The flexible drive transmission 10 is used for transmitting drive from a motor 12 to a power operated tool 14, such as a rotary knife. Referring to Figure 1, the illustrated flexible shaft drive transmission 10 comprises a flexible drive shaft assembly 20 connectable between the drive motor 12 and the tool 14, a tubular casing 22 surrounding and coaxial with the drive shaft assembly 20, and a relatively viscous lubricant, not illustrated, disposed within the casing 22. Where the transmission 10 is employed for operating a knife, or other food industry tool, the lubricant is edible.

In the illustration of Figure 1, the motor 12 is an electric motor that is suspended above a work station. The tool 14 is a rotary knife of the type that is used in the food processing industry for trimming cuts of meat. The knife is manually grasped and drawn across meat at the work station for trimming fat, removing meat from bones, carving filets of meat, etc. The knife 14 is illustrated as of a conventional, known type and therefore is not illustrated or described in detail. The knife 14 is shown for the purposes of illustration. Different knives and other tools may be used with the transmission 10.

The drive motor 12 is of conventional design and may be an electric or pneumatic motor. The motor 12 rotates a flexible elongated drive transmitting member 24 of the drive shaft assembly 20.

The drive shaft assembly 20 includes the drive transmitting shaft 24, a drive coupling 26, affixed to an end portion of the drive transmitting shaft 24 and releasably connectable to the motor 12, and a drive end portion 28, affixed to an opposite end portion of the drive transmitting shaft 24 and adapted to drive a pinion gear of the rotary knife 14. The drive shaft assembly 20 is described in detail in application serial no. 11/145,771, filed on June 6, 2005 and assigned to the assignee of the present invention. The '771 application is incorporated herein in its entirety by reference.

The casing 22 includes ends fittings 30, 32 affixed to opposite ends of a cylindrical casing body 34. The fitting 30 is adapted to be coupled to the motor 12 such that the drive coupling 26 of the drive shaft assembly 20 engages and is rotated by the motor 12. The fitting 32 is adapted to be coupled to a handle of the rotary knife 14 such that the drive end portion 28 of the drive shaft assembly 20 engages and rotates a pinion gear of the knife 14. The fittings 30, 32 may be swaged, molded, crimped or otherwise affixed to the casing body 34.

In one embodiment, the motor end fitting 30 comprises a thermoplastic molded part 35 which is overmolded onto the casing body 34. A bearing 36 is disposed within the molded part 35 to support a flange 25 of the drive transmitting shaft 24. A stress relief sleeve 37 is molded over the fitting 30 and the casing body 34 to prevent excessive bending of the drive transmitting shaft 24 immediately adjacent the motor assembly 12. The sleeve 37 is formed from a thermoplastic olefin material, but it could be fabricated of any suitable flexible resin. When the rotary knife 14 is to be operated, the operator grasps the end fitting 30 and inserts an end 30a into a receiving opening 12a in a housing 12b of the motor 12. The receiving opening 12a is illustrated as surrounded by a quick release type detent mechanism in Figure 1. The housing detent mechanism may be of any conventional or suitable construction. The housing detent snap fits into a recess 35a of molded part 35.

In one illustrative embodiment, the tool end fitting 32 comprises a threaded metal/ plastic end fitting 38 which is overmolded onto the casing body 34. The driver assembly 39b is inserted into an interior of a handle 16 of the knife 14 where an end of the driver assembly 39b operatively engages a pinion gear of the knife 14 to drive a rotary blade of the knife. When the knife 14 is to be operated, the operator grasps the end fitting 32 and inserts the drive assembly 39b into the interior of the handle 16.

The illustrated drive transmitting shaft 24 is a flex shaft composed of wires that are tightly wound into a helix that is capable of transmitting substantial torque yet is flexible so that the knife 14 can be manipulated while drive is transmitted to it.

The casing 22 supports the drive shaft assembly 20 for rotation relative to the casing generally about a longitudinal axis of the drive transmitting shaft 24. The casing body 34 comprises a spiral wound, flexible core 40 surrounding the drive transmitting shaft 24. The spiral wound core 40 is overlaid by a braided metal wire layer 42, which, in turn, is overlaid by an outer polymer layer 44.

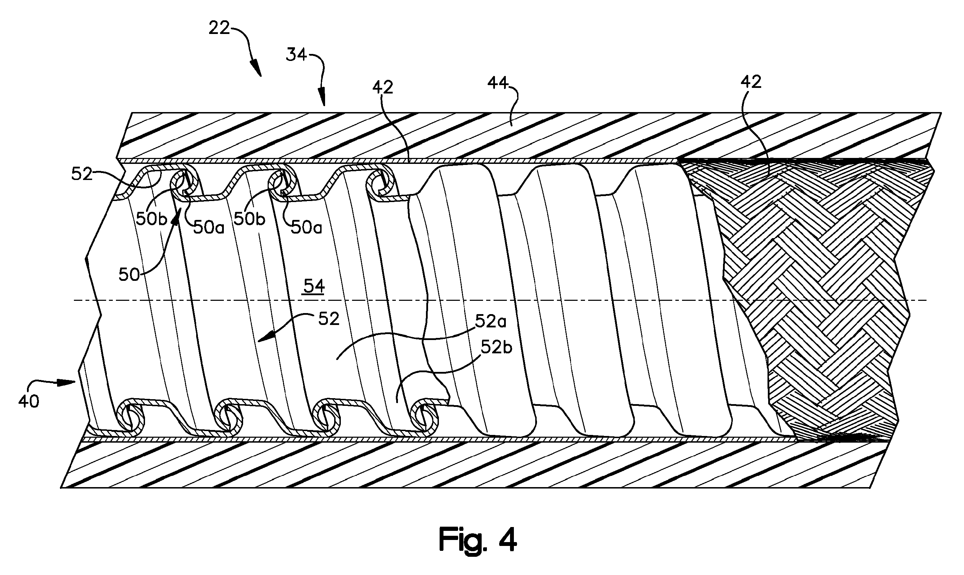

The spiral wound core 40 preferably comprises stainless steel interlocking conduit having a thickness in a range of 0.008 to 0.075 inches and an outside diameter in a range of 0.150 to 0.500 inches, depending on the specific application. Suitable stainless steel interlocking conduit may be purchased off the shelf from International Metal Hose Company, Bellevue, OH (www.metalhose.com). It should be understood that other materials may be substituted for stainless steel, as appropriate. Advantageously, as can be seen in Figure 4, the core 40 comprises a strip of metal wound into a spiral conduit configuration. The strip of metal includes oppositely bent edges 50a, 50b such that the edges interlock when the strip is wound into the spiral configuration on a mandrel. A middle portion 52 of the strip of material comprising the conduit core 40 extends between opposite edges 50a, 50b and comprises two portions 52a, 52b that are radially offset (see Figure 4).

The spiral wound conduit structure described above minimizes friction between the drive transmitting shaft 24 and an interior surface 54 defined by the core 40 because of the non-linear, offset profile of the conduit middle portion 52 (best seen in Figure 4). The drive transmitting shaft 24 generally does not contact the core interior surface 54 during rotation. To the very limited extent the drive transmitting shaft 24 would happen to contact the core interior surface 54 during rotation, due to the offset shape of the conduit interior surface 54, only the portion 52a would be contacted by the rotating shaft 24 thereby greatly reducing the area of contact between the shaft 24 and core interior surface. This reduces friction and the associated undesirable heat generated during operation.

The radially offset, arcuate shape of the conduit middle portion 52 provides a natural reservoir for lubricant injected between the core inner surface 54 and the shaft 24. The arcuate structure of the core 40 helps prevent migration of the lubricant along the shaft 24 when the shaft is rotating. Migration of the lubricant is undesirable since it leads to some of the lubricant ultimately escaping the casing body 34.

The braided metal wire layer 42 is comprised of a pair of stainless steel wires that are braided tightly around the spiral wound core 40. The braiding wires preferably are .035" stainless steel wires that are braided in an interwoven single layer of strands of wire wrapped in alternating directions over the core 40 in a herringbone fashion. Advantageously, the braiding functions to prevent the spiral wound core 40 from winding up or unwinding when the shaft 24 is rotating. Also, to the extent that the casing body 34 is subjected to stretching along its longitudinal axis, the braided layer 42 resists the stretching of the core 40 because the more the braided layer is longitudinally stretched, the tighter it becomes around the conduit, that is, when the braided layer 42 is subject to tension force, the greater inwardly directed axial force it exerts on the core 40.

The combination of the braided wire layer 42 and spiral wound metal core 40 provide cut resistance, yet the combination is lightweight and flexible thereby allowing the operator easy manipulation of the tool 14 which is necessary to allow for proper cutting of meat and to avoid operator fatigue.

The outer polymer layer 44 preferably comprises a thermoplastic elastomeric olefin material which is extruded over the braided metal wire layer 42. During the extruding process, the polymer in a semi-liquid form penetrates and impregnates the braided wire layer 42 and binds to both the braided wire layer 42 and the spiral wound core 40. The outer surface of the polymer layer 44 is both durable and smooth, providing for easy clean up. Because of adhesion between the sheath and outer body, and mechanical interconnections between the core 40, the braided layer 42 and the polymer outer layer 44, the casing body elements are bound together and function as a single unit. Optionally, a layer of adhesive may be applied between the outer layer 44 and the braided layer 42 to further enhance the bonding between the outer layer 44, the braided layer 42 and the core 40.

While the present invention has been described with a degree of particularity, it is the intent that the invention includes all modifications and alterations from the disclosed design falling with the spirit or scope of the appended claims.

## Claims

1. A flexible shaft drive transmission having a first end connectable to a drive motor and a second end connectable to a power driven tool to drive the tool, the transmission comprising:
a) a flexible drive shaft assembly comprising a flexible elongated drive transmitting member, a first end of the drive transmitting member operatively coupled to the drive motor and a second end of the drive transmitting member operatively coupled to the power driven tool; and
b) a flexible tubular casing surrounding and coaxial with said drive shaft assembly and supporting said drive shaft assembly for rotation generally about a longitudinal axis of said drive shaft assembly relative to said casing, said casing comprising:
1) a core comprising a spiral wound strip of material having interlocking opposing edges;
2) a braided wire layer surrounding the core; and
3) a polymer layer surrounding the braided wire layer.

2. The transmission of claim 1 wherein the polymer layer is extruded over the braided wire layer, the polymer layer impregnating and binding to the braided wire layer and the core.

3. The transmission of claim 1 or claim 2 wherein the core is metal.

4. The transmission of any preceding claim wherein spiral wound strip includes a middle portion extending between opposing edges, a first portion of the middle portion being radially offset from a second portion of the middle portion.

5. The transmission of any preceding claim wherein the braided wire comprises a herringbone braid.

6. The transmission of any preceding claim wherein the braided wire comprises stainless steel wire.

7. The transmission of any preceding claim wherein the core comprises stainless steel.

8. The transmission of any preceding claim wherein the core comprises flexible conduit.

9. A flexible casing rotatably supporting a flexible drive shaft assembly comprising a flexible elongated drive transmitting member, a first end of the drive transmitting member operatively coupled to a drive motor and a second end of the drive transmitting member operatively coupled to a power driven tool, the flexible casing comprising:
1) a core comprising a spiral wound strip of material having interlocking opposing edges;
2) a braided wire layer surrounding the core; and
3) a polymer layer surrounding the braided wire layer.

10. The casing of claim 9 wherein the polymer layer is extruded over the braided wire layer, the polymer layer impregnating and binding to the braided wire layer and the core.

11. The casing of claim 9 or claim 10 wherein the core is metal.

12. The casing of any of claims 9 to 11 wherein spiral wound strip includes a middle portion extending between opposing edges, a first portion of the middle portion being radially offset from a second portion of the middle portion.

13. The casing of any of claims 9 to 12 wherein the braided wire comprises a herringbone braid.

14. The casing of any of claims 9 to 13 wherein the braided wire comprises stainless steel wire.

15. The casing of any of claims 9 to 14 wherein the core comprises stainless steel.

16. The transmission of any of claims 9 to 15 wherein the core comprises flexible conduit.
